# EUROPEAN PATENT APPLICATION

(11) **EP 4 343 900 A1**
(43) Date of publication of application: **27.03.2024**
(21) Application number: 22804550.6
(22) Date of filing: 09.05.2022
(51) Int. Cl.: H01M 8/0286, F16J 15/00, H01M 8/0273, B29C 39/10

(54) **GASKET MOLDING METHOD, FUEL CELL, FUEL CELL PRODUCTION METHOD, SEALING METHOD AND GASKET MOLDING DEVICE**

(30) Priority: 19.05.2021 JP 2021084802
(71) Applicant: ThreeBond Co., Ltd., Tokyo 192-0398 (JP)
(72) Inventor: ARAI, Yoshihide, Hachioji-shi, Tokyo 192-0398 (JP); TANAKA, Masayuki, Hachioji-shi, Tokyo 192-0398 (JP); SUZUKI, Nao, Hachioji-shi, Tokyo 192-0398 (JP); KIBE, Hajime, Hachioji-shi, Tokyo 192-0398 (JP); MINODA, Keisuke, Hachioji-shi, Tokyo 192-0398 (JP); KADO, Takuma, Hachioji-shi, Tokyo 192-0398 (JP)
(74) Representative: V.O.
(86) International application number: PCT/JP2022/019679
(87) International publication number: WO 2022/244637

(57) **Abstract**

Provided is a gasket molding method that enables molding under low pressure. A gasket molding method according to the present invention for molding a gasket (30) on a workpiece (10) comprises, in the order stated: an application step (S1) for applying, inside a cavity (41) of a molding die (40), an active energy ray curable liquid (20); a bonding step (S2) for bonding the molding die (40), to which the active energy ray curable liquid (20) has been applied, and the workpiece (10); a curing step (S3) for curing, by irradiation with active energy rays, the active energy ray curable liquid (20) which has been applied; and a molding die release step for peeling off, from the molding die (40), the cured active energy ray curable liquid (20) together with the workpiece (10).

## Description

### Technical Field

The present disclosure relates to a gasket molding method, a fuel cell, a fuel cell production method, and a sealing method.

### Background Art

A gasket is known as a component that is used to seal between two components. Such a gasket is generally formed by injection molding, in which a mold having a cavity of a desired shape is filled with a molding resin, such as a thermoplastic resin.

For example, Patent Document 1 discloses another method for molding a gasket, in which a molding die and a workpiece are bonded together in advance, and a molding resin is injected into the molding die to form a gasket in the workpiece.

### Prior Art Document

### Patent Document

Patent Document 1: Japanese translation of PCT publication No. 2009-524196

### Summary of the Invention

### Problems to be Solved by the Invention

Injection molding is performed under high pressure and also involves heating the molding resin, which can cause sink marks and distortion after molding, resulting in the deformation of the gasket. Similarly, in the molding method disclosed in Patent Document 1, the molding resin is injected under high pressure, which may also cause the deformation of the gasket. In addition, according to the molding method disclosed in Patent Document 1, it is necessary to press the molding die and the workpiece for forming the gasket with a strong clamping force during molding, which may increase the load on the workpiece.

The present disclosure has been made to address the above disadvantages and to provide a gasket molding method capable of molding a gasket under low pressure, a fuel cell, a fuel cell production method, a sealing method, and a gasket molding device.

### Means for Solving the Problems

(1) According to one aspect of the present disclosure, a gasket molding method for molding a gasket on a workpiece includes, in the order recited: an application step for applying an active energy ray curable liquid into a cavity of a molding die; a bonding step for bonding the molding die coated with the active energy ray curable liquid and the workpiece; a curing step for curing the applied active energy ray curable liquid by irradiation with an active energy ray; and a mold release step for pulling off the cured active energy ray curable liquid from the molding die together with the workpiece.
(2) In the above aspect (1), in the application step, the active energy ray curable liquid may be applied in an amount equal to or more than 100% of the volume of the cavity.
(3) In the above aspect (1) or (2), the application step may be performed using a dispenser.
(4) In any one of the above aspects (1) to (3), the molding die may have transparency.
(5) In any one of the above aspects (1) to (4), the molding die may be made of one or more materials selected from the group consisting of polymethyl methacrylate, cycloolefin polymer, polycarbonate, and glass.
(6) In any one of the above aspects (1) to (5), in the curing step, the active energy ray may be irradiated from the molding die side.
(7) In any one of the above aspects (1) to (6), in the bonding step, at least one of position control and load control may be performed.
(8) In any one of the above aspects (1) to (7), the workpiece may be a fuel cell component.
(9) According to another aspect of the present disclosure, a fuel cell includes a gasket obtained by the gasket molding method as set forth in any one of the above aspects (1) to (7).
(10) According to still another aspect of the present disclosure, a fuel cell production method includes, in the order recited: an application step for applying an active energy ray curable liquid into a cavity of a molding die; a bonding step for bonding the molding die coated with the active energy ray curable liquid and a fuel cell component; a curing step for curing the applied active energy ray curable liquid by irradiation with an active energy ray; and a mold release step for pulling off the cured active energy ray curable liquid from the molding die together with the fuel cell component.
(11) In the above aspect (10), the fuel cell component may be one selected from the group consisting of a separator, an electrolyte membrane, a frame, and an electrolyte membrane/electrode assembly.
(12) According to still another aspect of the present disclosure, a sealing method for sealing between two components includes: a molding step for molding a gasket on one component by the gasket molding method as set forth in any one of the above aspects (1) to (7) ; and a crimping step for placing another component on the gasket molded on the one component and crimping the one component and the other component together.
(13) According to still another aspect of the present disclosure, a gasket molding device includes: an application device that ejects an active energy ray curable liquid onto a workpiece using a dispenser; a bonding device that includes a molding die having transparency and bonds the workpiece to the molding die; a drive device that moves the workpiece and the dispenser relative to each other; and an active energy ray irradiation device that irradiates the active energy ray curable liquid with an active energy ray.

### Effects of the Invention

According to the present disclosure, it is possible to provide a gasket molding method capable of molding a gasket under low pressure with less load on a workpiece for forming the gasket, a fuel cell, a fuel cell production method, and a sealing method.

### Brief Description of the Drawings

[FIG. 1] FIG. 1 is a schematic plan view of a workpiece in which a gasket is molded.
[FIG. 2A] FIG. 2A is a flowchart illustrating a gasket molding method according to an embodiment of the invention.
[FIG. 2B] FIG. 2B is a diagram illustrating the operation of the gasket molding method according to an embodiment of the invention.
[FIG. 3] FIG. 3 is a schematic perspective view of a molding die.
[FIG. 4] FIG. 4 is a schematic cross-sectional view of a fuel cell.
[FIG. 5] FIG. 5 is a flowchart illustrating a sealing method for sealing between two components.

### Modes for Carrying Out the Invention

In the following, exemplary embodiments will be described in detail with reference to the accompanying drawings. Note that like parts are designated by like reference numerals or characters throughout the description of the embodiments.

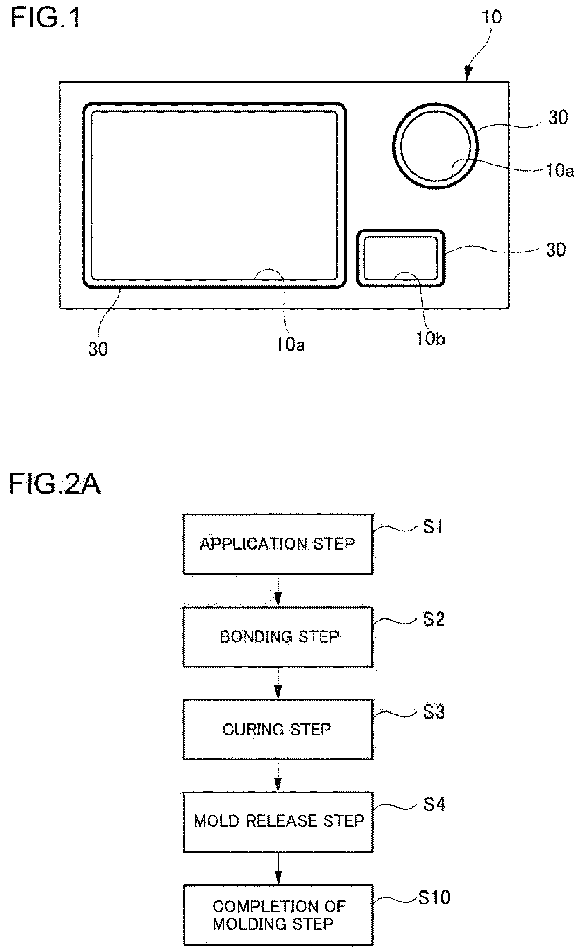

Before describing a gasket molding method of an embodiment of the invention, a brief description will be given of a workpiece 10 in which a gasket 30 is molded. FIG. 1 is a schematic plan view of the workpiece 10 in which the gasket 30 is molded.

The workpiece 10 is one or the other of two components assembled together through the gasket 30 and is of a desired size and shape. For example, the workpiece 10 may be made of metal such as iron, aluminum, stainless steel, magnesium, and titanium, carbon, or resin such as polyvinyl chloride, polyethylene naphthalate, polyethylene terephthalate, polyethylene, polypropylene, and polycarbonate. In this embodiment, the workpiece 10 is in the form of a rectangular plate.

The workpiece 10 has one or more openings 10a or one or more recesses 10b formed therein. The gasket 30 is formed around the openings 10a and the recesses 10b. The workpiece 10 preferably has a flat surface on which the gasket 30 is formed; however, it may have a surface portion that is gently inclined.

Note that the workpiece 10 need not necessarily have the openings 10a and the recesses 10b, and the other component may have the openings 10a and the recesses 10b.

Next, a gasket molding device used in the gasket molding method according to the embodiment will be briefly described.

The gasket molding device mainly includes an application device, a bonding device, an XYZ-axis drive device, an active energy ray irradiation device 60, a release device, and a control device.

The application device is capable of applying a liquid to an object to be coated. The application device may be, for example, a dispenser, a spray, or a device used for application in inkjet printing, screen printing, gravure printing, and the like. Among them, a dispenser is preferred. The application device of this embodiment includes a dispenser 50 that discharges a liquid from a nozzle toward an object to be coated, a tank or syringe that stores the liquid, and a pump that supplies the liquid. The application device may further include a rotation mechanism to rotate the nozzle about the Z-axis. Examples of the dispenser include those of the Mohno system (uniaxial eccentric screw rotation system), those of the volumetric piston system with a plunger, and the like. Among them, a volumetric piston dispenser with a plunger is preferred because fewer air bubbles are entrained.

The bonding device may be of the clamshell type having a fixed table for holding one of the objects to be bonded (molding die 40), a movable table for holding the other of the objects to be bonded (workpiece 10), and a reversing drive unit for reversely moving the movable table toward or away from the fixed table. However, the structure of the bonding device is not limited to the clamshell type.

The bonding device further includes an imaging device such as a CCD camera for capturing an image of the objects to be bonded so that the position, inclination, and the like of the objects can be checked during bonding. The bonding device is also used as the release device for separating the bonded objects. However, the release device and the bonding device may be provided independently.

The XYZ-axis drive device includes an X-axis moving unit that moves the dispenser 50 in the horizontal direction, a Y-axis moving unit that moves the dispenser 50 in the front-rear direction, and a Z-axis moving unit that moves the dispenser 50 in the vertical direction. Note that the XYZ-axis drive device may have any configuration as long as it can move the dispenser 50 along the three-dimensional XYZ axes relative to an object to be coated. For example, the XYZ-axis drive device may include an XY table that holds the dispenser 50 and a Z table that holds an object to be coated.

The active energy ray irradiation device 60 irradiates light such as ultraviolet rays and electron beams, and is configured as a linear light source or planar surface light source with a UV lamp or UV LED. The active energy ray irradiation device 60 is arranged to be movable or stationary with respect to an object to be coated. The active energy ray irradiation device 60 may be installed behind the dispenser 50 in the direction of movement to cure the liquid as the dispenser 50 applies the liquid.

The control device integrates and controls the application device, the bonding device (release device), the XYZ-axis drive device, and the active energy ray irradiation device 60. For example, the control device controls the rotational speed (rotational frequency, rotation angle) of the pump to adjust the amount dispensed by the dispenser 50. The control device also controls the rotational speed (rotation angle) of the reversing drive unit to adjust the bonding load and push-in amount, thereby controlling the load or the position of the movable table. In addition, the control device controls the position and speed of the dispenser 50 by driving each moving unit of the XYZ-axis drive device and controls the power supply of the active energy ray irradiation device 60 to adjust the irradiation output of the light source.

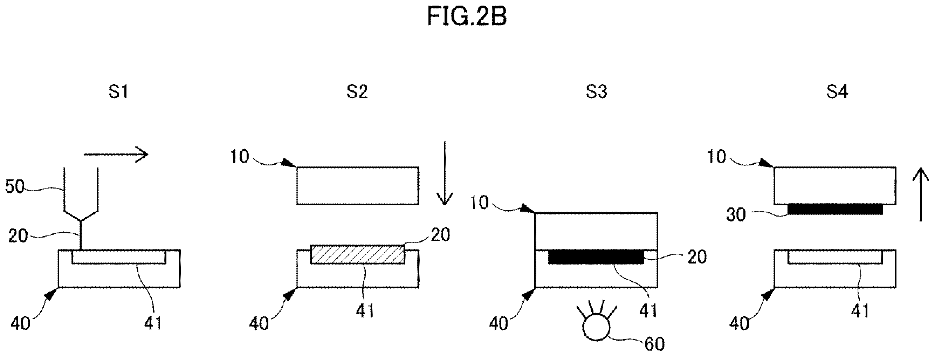

Next, the gasket molding method for molding the gasket 30 on the workpiece 10 using an active energy ray curable liquid 20 will be described. FIG. 2A is a flowchart illustrating the gasket molding method according to the embodiment. FIG. 2B is a diagram illustrating the operation of the gasket molding method.

The active energy ray curable liquid 20 is an ultraviolet curable resin that reacts and cures when irradiated with an active energy ray (e.g., UV light). The active energy ray curable liquid 20 may be, for example, a (meth)acrylate composition that undergoes radical polymerization or an epoxy composition that undergoes cationic polymerization.

Incidentally, the term "liquid" as used herein means a liquid at 25°C. In addition, the viscosity of the active energy ray curable liquid 20 at 25°C is not particularly limited; however, it may be, for example, 500 Pa·s or less, preferably 0.01 Pa·s to 400 Pa·s, and more preferably 0.1 Pa.s to 350 Pa·s, particularly preferably 1 Pa·s to 300 Pa·s. Similarly, the structural viscosity ratio of the active energy ray curable liquid 20 at 25°C is not particularly limited; however, it may be, for example, 1.0 to 10, preferably 1.1 to 8, more preferably 1.3 to 7, particularly preferably 2.0 to 6. The active energy ray curable liquid 20 can be made even more suitable for the gasket molding method of the embodiment by adjusting the viscosity or structural viscosity ratio within the above ranges. The viscosity and structural viscosity ratio can be determined using a rheometer.

Examples of the (meth)acrylate composition that undergoes radical polymerization include a composition containing a (meth)acryloyl group-containing oligomer, a (meth)acryloyl group-containing reactive diluent, and a photoradical initiator. Examples of the (meth)acryloyl group-containing oligomer include, but are not limited to, urethane (meth)acrylate having a polycarbonate skeleton, urethane (meth)acrylate having a polyether skeleton, urethane (meth)acrylate having a polyester skeleton, urethane (meth)acrylate having a castor oil skeleton, urethane (meth)acrylate having a polybutadiene skeleton, urethane (meth)acrylate having a hydrogenated polybutadiene skeleton, polyisobutylene-based (meth)acrylate, silicone-based (meth)acrylate, isoprene-based (meth)acrylate, hydrogenated isoprene-based (meth)acrylate, and (meth)acrylic group-containing acrylic polymer. Examples of the (meth)acryloyl group-containing reactive diluent include, but are not limited to, ethyl (meth)acrylate, n-butyl (meth)acrylate, ter-butyl (meth)acrylate, isobutyl methacrylate, 2-ethylhexyl (meth)acrylate, isodecyl (meth)acrylate, glycidyl (meth)acrylate, lauryl (meth)acrylate, stearyl (meth)acrylate, tetrahydrofurfuryl (meth)acrylate, cyclohexyl (meth)acrylate, t-butylcyclohexyl (meth)acrylate, trimethylcyclohexyl (meth)acrylate, dicyclopentanyl (meth)acrylate, dicyclopentenyl (meth)acrylate, dicyclopentenyloxy (meth)acrylate, isobornyl (meth)acrylate, adamantyl (meth)acrylate, benzyl (meth)acrylate, phenyl (meth)acrylate, phenoxyethyl (meth)acrylate, nonylphenoxyethyl (meth)acrylate, butoxyethyl (meth)acrylate, 2-hydroxyethyl (meth)acrylate, 2-hydroxypropyl (meth)acrylate, 4-hydroxybutyl (meth)acrylate, acryloylmorpholine, morpholinoethyl (meth)acrylate, dimethylaminoethyl (meth)acrylate, diethylaminoethyl (meth)acrylate, N,N-dimethylaminoethyl (meth)acrylate, and N,N-dimethylaminopropyl (meth)acrylate. Examples of the photoradical initiator include, but are not limited to, acetophenone-based photoradical polymerization initiator, benzoin-based photoradical polymerization initiator, benzophenone-based photoradical polymerization initiator, thioxanthone-based photoradical polymerization initiator, acylphosphine oxide-based photoradical polymerization initiator, and titanocene-based photoradical polymerization initiator. The mixing ratio for the (meth)acrylate composition is not particularly limited: the (meth)acrylate composition may contain, for example, 0.1 to 1000 parts by mass of the (meth)acryloyl group-containing reactive diluent and 0.1 to 30 parts by mass of the photoradical initiator with respect to 100 parts by mass of the (meth)acryloyl group-containing oligomer.

Examples of the epoxy composition that undergoes cationic polymerization include a composition containing a cationic polymerizable compound and a photocationic initiator. Examples of the cationic polymerizable compound include, but are not limited to, epoxy resins, alicyclic epoxy resins, oxetane compounds, and vinyl ether compounds. Examples of the photocationic initiator include, but are not limited to, onium salts such as aromatic iodonium salts and aromatic sulfonium salts. The mixing ratio for the epoxy composition is not particularly limited: the epoxy composition may contain, for example, 0.1 to 30 parts by mass of the photocationic initiator with respect to 100 parts by mass of the cationic polymerizable compound.

A thixotropic agent may be added to the active energy ray curable liquid 20 to impart thixotropy thereto. Examples of the thixotropic agent include, but are not limited to, silica, amide wax, and hydrogenated castor oil, of which silica is particularly preferred.

Examples of the above-mentioned silica include hydrophilic silica and hydrophobic silica. The hydrophobic silica may be a silica that has been treated with organochlorosilanes, polyorganosiloxane, hexamethyldisilazane, or the like to make it hydrophobic.

A gasket molding method of the embodiment includes an application step S1, a bonding step S2, a curing step S3, and a mold release step S4, which are performed in this order.

In the application step S1, first, the dispenser 50 applies the active energy ray curable liquid 20 into a cavity 41 of a molding die 40 (described later) in a desired gasket shape while moving, for example, in a unicursal trajectory.

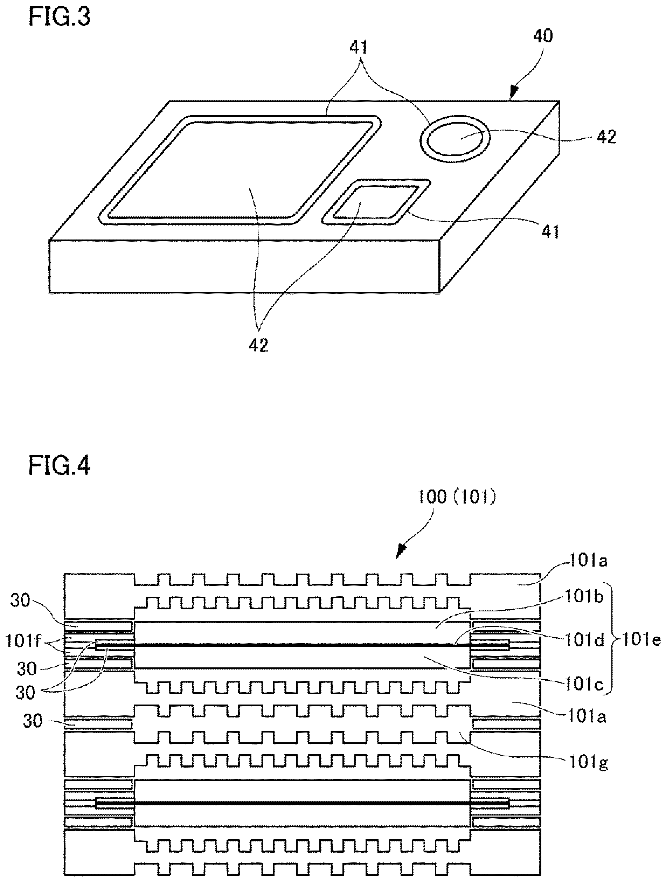

Described below is the molding die 40. FIG. 3 is a schematic perspective view of the molding die 40.

The molding die 40 is held on the fixed table of the bonding device and has the cavity 41 having a shape corresponding to the gasket 30 to be molded. The cavity 41 has, for example, a circular, elliptical ring, or rectangular ring shape, and the inside thereof is configured as a land portion 42. Note that the cavity 41 may be in a closed shape that does not overlap with another trajectory, such as a unicursal trajectory, or a closed shape that overlaps with another trajectory, and it may have any shape.

In addition, the cavity 41 is formed so that its cross-section has the same shape as the cross-sectional shape of the desired gasket 30, such as substantially rectangular, substantially trapezoidal, substantially triangular (mountain shape), substantially semicircular, or the like. The cross-section of the cavity 41 may have a height greater than the width or, conversely, a width greater than the height.

The molding die 40 is made of a transparent material through which light can pass. For example, the molding die 40 is made of one or more materials selected from the group consisting of polymethyl methacrylate, cycloolefin polymer, polycarbonate, and glass. Incidentally, the surface of the cavity 41 may be subjected to a surface treatment which improves the releasability.

Referring back to FIG. 2A, the description of the application step S1 is continued. In the application step S1, the dispenser 50 may dispense the active energy ray curable liquid 20 in an amount equal to or more than 100% of the volume of the cavity 41 so that the active energy ray curable liquid 20 slightly overflows from the cavity 41. In other words, the amount dispensed by the dispenser 50 per unit length may be set to 100% or more of the volume per unit length. The upper limit of the amount to be dispensed may be about 110%.

Next, in the bonding step S2, the movable table of the bonding device which holds the workpiece 10 is reversed so as to face the fixed table which holds the molding die 40 coated with the active energy ray curable liquid 20, and the molding die 40 and the workpiece 10 are bonded together with the uncured active energy ray curable liquid 20 interposed therebetween.

At this time, the molding die 40 and the workpiece 10 are bonded with a bonding load of 1 MPa or less. The bonding load may be adjusted along with the pressure control by measuring the bonding pressure, or along with the position control by measuring the bonding amount (push-in amount). In this manner, the molding die 40 and the workpiece 10 can be bonded with a low load to mold a gasket, thereby reducing the load on the workpiece.

Subsequently, in the curing step S3, the active energy ray curable liquid 20 interposed between the molding die 40 and the workpiece 10 is cured by irradiation with active energy rays using the active energy ray irradiation device 60.

The active energy ray irradiation device 60 is located on the side opposite to the molding surface of the molding die 40 in which the cavity 41 is formed. The irradiated active energy rays pass through the transparent molding die 40 and reach the active energy ray curable liquid 20. Although not particularly limited, the curing shrinkage rate of the active energy ray curable liquid 20 is preferably, for example, 10% or less, more preferably 2% to 10%.

In the mold release step S4, in the bonding device as the release device, the movable table is reversed to be separated from the fixed table so that the cured active energy ray curable liquid 20 (as the gasket 30) is pulled out of (the cavity 41 of) the molding die 40 together with the workpiece 10. In order to facilitate the removal of the gasket 30 from the molding die 4 after use, it is preferable that the molding die 4 be coated in advance with a release agent such as a fluorine-based or silicone-based release agent.

After that, the workpiece 10 is removed from the movable table, and a molding step S10 is completed. Thus, the workpiece 10 having the gasket 30 directly on its surface can be obtained.

Described below is an example in which the gasket molding method of the embodiment is applied to the method of producing a fuel cell 100 using a fuel cell component 101 as the workpiece 10 for molding the gasket 30. FIG. 4 is a schematic cross-sectional view of the fuel cell 100.

Examples of the fuel cell component 101 include a separator 101a, an electrolyte membrane 101d, a frame 101f, and an electrolyte membrane/electrode assembly 101e, which constitute (a cell of) the fuel cell 100 (see FIG. 4), and the gasket 30 is molded thereto.

Of these, it is preferable to form the gasket 30 on the separator 101a made of aluminum, stainless steel, titanium, graphite, carbon, or the like. FIG. 4 also illustrates a fuel electrode 101b, an air electrode 101c, and a cooling water passage 101g.

The production method of the fuel cell 100 includes: an application step S1 for applying the active energy ray curable liquid 20 into the cavity 41 of the molding die 40; a bonding step S2 for bonding the molding die 40 coated with the active energy ray curable liquid 20 and the fuel cell component 101; a curing step S3 for curing the applied active energy ray curable liquid 20 by irradiation with active energy rays; and a mold release step S4 for pulling off the cured active energy ray curable liquid 20 from the molding die 40 together with the fuel cell component 101, which are performed in this order.

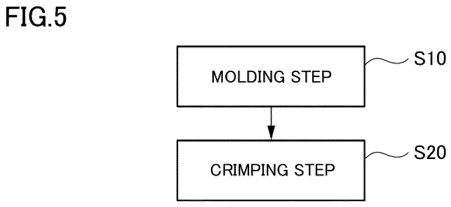

Described below is another example in which the gasket molding method of the embodiment is applied to a sealing method for sealing between two components. FIG. 5 is a flowchart illustrating the sealing method for sealing between two components.

The sealing method for sealing between two components includes a molding step S10 for molding the gasket 30 on one component (e.g., the workpiece 10 described above) and a crimping step S20 for crimping or pressure-bonding the one component and the other component.

The molding step S10 is performed as in the gasket molding method described above, and therefore the description thereof is omitted.

In the crimping step S20, the other component is placed on the gasket 30 molded on the one component, and the one component and the other component are crimped to each other (pressure-bonded together). In the crimping step S20, a crimping device such as the bonding device used in the bonding step S2 may be used, and position control or pressure control may be performed. If the two components are those that are fastened and fixed together with a screw (bolt), they may be screwed together, or they may be bonded together by riveting.

The sealing method is applicable not only to the fuel cell 100 described above, but also to relatively small components such as the main seal of a liquid crystal display (LCD) panel.

As described above, the gasket molding method of the embodiment is a method of molding the gasket 30 on the workpiece 10. According to the embodiment, the gasket molding method includes: an application step S1 for applying the active energy ray curable liquid 20 into the cavity 41 of the molding die 40; a bonding step S2 for bonding the molding die 40 coated with the active energy ray curable liquid 20 and the workpiece 10; a curing step S3 for curing the applied active energy ray curable liquid 20 by irradiation with active energy rays; and a mold release step S4 for pulling off the cured active energy ray curable liquid 20 from the molding die 40 together with the workpiece 10, which are performed in this order.

Thus, the gasket 30 can be molded under low pressure using the active energy ray curable liquid 20. Note that the term "low pressure" refers to, for example, 1 MPa or less.

In the application step S1 of the embodiment, the active energy ray curable liquid 20 is applied in an amount equal to or more than 100% of the volume of the cavity 41. This prevents air from entering between the workpiece 10 and the active energy ray curable liquid 20 in the bonding step S2.

The application step S1 of the embodiment is performed using a dispenser. This makes it easier to control the amount of liquid dispensed in the application step S1. In this case, for example, if the dispenser applies the liquid in a unicursal trajectory, there is no overlapping portion where the application trajectories intersect. As a result, the position and speed control of the dispenser 50 can be simplified.

The molding die 40 of the embodiment is transparent. Thereby, in the curing step S3, active energy rays can be irradiated from the side of the cavity 41 opposite to the molding surface.

The molding die 40 of the embodiment is made of one or more materials selected from the group consisting of polymethyl methacrylate, cycloolefin polymer, polycarbonate, and glass. This allows the molding die 40 to have transparency.

In the curing step S3 of the embodiment, active energy rays are irradiated from the molding die 40 side. Thus, even if the workpiece 10 does not have transparency, the active energy ray curable liquid 20 can be irradiated with active energy rays from the molding die 40 side.

In the bonding step S2 of the embodiment, at least one of position control and load control is performed. This allows the bonding load to be controlled uniformly with high accuracy.

The fuel cell 100 of the embodiment includes the gasket 30 obtained by the gasket molding method described above, and the fuel cell component 101 serves as the workpiece 10. In addition, the fuel cell component 101 is any one selected from the group consisting of the separator 101a, the electrolyte membrane 101d, the frame 101f, and the electrolyte membrane/electrode assembly 101e.

The production method of the fuel cell 100 includes: an application step S1 for applying the active energy ray curable liquid 20 into the cavity 41 of the molding die 40; a bonding step S2 for bonding the molding die 40 coated with the active energy ray curable liquid 20 and the fuel cell component 101; a curing step S3 for curing the applied active energy ray curable liquid 20 by irradiation with active energy rays; and a mold release step S4 for pulling off the cured active energy ray curable liquid 20 from the molding die 40 together with the fuel cell component 101.

In this manner, the gasket molding method can be applied to the production method of the fuel cell 100. Furthermore, in the gasket molding method of the embodiment, molding can be performed under low pressure, and the gasket 30 can be molded by bonding with a low load. As a result, the load on the fuel cell component 101 can be reduced.

The sealing method of the embodiment is a method for sealing between two components. The sealing method includes: a molding step S10 for molding the gasket 30 on one component by the gasket molding method described above; and a crimping step S20 for placing the other component on the gasket 30 molded on the one component and crimping the one component and the other component together. In this manner, the gasket molding method can be applied to the sealing method.

The gasket molding device of the embodiment includes: an application device that ejects the active energy ray curable liquid 20 onto the workpiece 10 using the dispenser 50; a bonding device that includes the molding die 40 having transparency and bonds the workpiece 10 to the molding die 40; a drive device that moves the workpiece 10 and the dispenser 50 relative to each other; and the active energy ray irradiation device 60 that irradiates the active energy ray curable liquid 20 with active energy rays. Thus, the gasket 30 can be molded under low pressure by ejecting the active energy ray curable liquid 20 using the dispenser 50.

Although specific embodiments of the invention have been described and illustrated, it is to be understood that the invention is not to be limited to the embodiments disclosed herein. Various changes, modifications, and alterations may be made within the scope of the invention as defined by the appended claims.

### [List of Reference Signs]

- 10: Workpiece
- 10a: Opening
- 10b: Recess
- 20: Active energy ray curable liquid
- 30: Gasket
- 40: Molding die
- 41: Cavity
- 42: Land portion
- 50: Dispenser
- 60: Active energy ray irradiation device
- 100: Fuel cell
- 101: Fuel cell component
- 101a: Separator
- 101b: Fuel electrode
- 101c: Air electrode
- 101d: Electrolyte membrane
- 101e: Electrolyte membrane/electrode assembly
- 101f: Frame
- 101g: Cooling water passage

## Claims

1. A gasket molding method for molding a gasket on a workpiece, comprising, in the order recited:
an application step for applying an active energy ray curable liquid into a cavity of a molding die;
a bonding step for bonding the molding die coated with the active energy ray curable liquid and the workpiece;
a curing step for curing the applied active energy ray curable liquid by irradiation with an active energy ray; and
a mold release step for pulling off the cured active energy ray curable liquid from the molding die together with the workpiece.

2. The gasket molding method according to claim 1, wherein, in the application step, the active energy ray curable liquid is applied in an amount equal to or more than 100% of a volume of the cavity.

3. The gasket molding method according to claim 1 or 2, wherein the application step is performed using a dispenser.

4. The gasket molding method according to any one of claims 1 to 3, wherein the molding die has transparency.

5. The gasket molding method according to any one of claims 1 to 4, wherein the molding die is made of one or more materials selected from a group consisting of polymethyl methacrylate, cycloolefin polymer, polycarbonate, and glass.

6. The gasket molding method according to any one of claims 1 to 4, wherein, in the curing step, the active energy ray is irradiated from the molding die side.

7. The gasket molding method according to any one of claims 1 to 6, wherein, in the bonding step, at least one of position control and load control is performed.

8. The gasket molding method according to any one of claims 1 to 7, wherein the workpiece is a fuel cell component.

9. A fuel cell comprising a gasket obtained by the gasket molding method according to any one of claims 1 to 7.

10. A fuel cell production method comprising, in the order recited:
an application step for applying an active energy ray curable liquid into a cavity of a molding die;
a bonding step for bonding the molding die coated with the active energy ray curable liquid and a fuel cell component;
a curing step for curing the applied active energy ray curable liquid by irradiation with an active energy ray; and
a mold release step for pulling off the cured active energy ray curable liquid from the molding die together with the fuel cell component.

11. The fuel cell production method according to claim 10, wherein the fuel cell component is one selected from a group consisting of a separator, an electrolyte membrane, a frame, and an electrolyte membrane/electrode assembly.

12. A sealing method for sealing between two components, comprising:
a molding step for molding a gasket on one component by the gasket molding method according to any one of claims 1 to 7; and
a crimping step for placing another component on the gasket molded on the one component and crimping the one component and the other component together.

13. A gasket molding device comprising:
an application device that ejects an active energy ray curable liquid onto a workpiece using a dispenser;
a bonding device that includes a molding die having transparency and bonds the workpiece to the molding die;
a drive device that moves the workpiece and the dispenser relative to each other; and
an active energy ray irradiation device that irradiates the active energy ray curable liquid with an active energy ray.
